# EUROPÄISCHE PATENTSCHRIFT

(11) **EP 1 955 837 B1**
(45) Veröffentlichungstag und Bekanntmachung des Hinweises auf die Patenterteilung: **13.03.2013**
(21) Anmeldenummer: 08150120.7
(22) Anmeldetag: 09.01.2008
(51) Int. Cl.: B29C 47/20, B29C 47/70, B29C 47/74, B29C 47/68

(54) **Vorrichtung und Verfahren zum Verteilen von plastischer Kunststoffmasse**
Device and method for distributing plasticised material
Dispositif et procédé destinés à répartir une masse en matière plastique

(30) Priorität: 10.02.2007 DE 102007006610
(43) Veröffentlichungstag der Anmeldung: 13.08.2008
(73) Patentinhaber: battenfeld-cincinnati Germany GmbH, 32547 Bad Oeynhausen (DE)
(72) Erfinder: Dohmann, Heinrich, 37671 Höxter (DE); Seibel, Stefan, Dr., 33102 Paderborn (DE)

(56) Entgegenhaltungen:
- DE-A1- 19 846 158
- US-A- 2 908 938
- US-A1- 2002 163 099
- DATABASE WPI Week 200346 Derwent Publications Ltd., London, GB; AN 2003-485878 XP002482552 & JP 2002 347101 A (SEKISUI CHEM IND CO LTD) 4. Dezember 2002 (2002-12-04)

## Beschreibung

Die Erfindung betrifft eine Vorrichtung zum Verteilen von plastischer Kunststoffmasse in einem Extrusionswerkzeug, insbesondere Rohrextrusionswerkzeug, umfassend einen Schmelzeeingang und mindestens einen Schmelzeausgang, wobei zwischen Schmelzeeingang und Schmelzeausgang ein Verteilelement gemäß den Merkmalen des Oberbegriffs des Anspruchs 1 angeordnet ist.

Solche Vorrichtungen sind aus den Druckschriften US-A-2 908 938, DE-A-103 15 906 und DE-A-198 46 158 bekannt. Die Erfindung betriff auch ein Verfahren gemäß den Merkmalen des Oberbegriffs des Anspruchs 10.

Zur Herstellung von Rohren ist es erforderlich, den von einem Extruder erzeugten zylinderförmigen Kunststoffschmelzestrom mit Hilfe eines nachfolgenden Werkzeuges in einen kreisringspaltförmigen Schmelzestrom umzuformen. Hierfür ist es wichtig, dass der vom Extruder kommende Schmelzestrom im Werkzeug durch einen zentrisch angeordneten Dorn in die entsprechende Ringströmung überführt wird.

Um den Dorn im Werkzeug mechanisch fixieren zu können ist es erforderlich, diesen mit Hilfe von Verbindungselementen am äußeren Werkzeuggehäuse zu befestigen. Die Verbindungselemente teilen den vom Extruder kommenden Schmelzestrom in mindestens zwei Stränge auf, welche nachfolgend wieder durch entsprechende Verfahren zusammengeführt werden. Bei Polyolefinen mit großem Memory-Effekt sind Wendelverteiler und Siebkörbe die hierfür gebräuchlichsten Hilfsmittel.

Die Wendelverteiler erzielen in der Regel eine gute axiale und radiale Durchmischung der Verteilerströme ohne Bindenähte, müssen aber in ihrer geometrischen Gestaltung an die jeweiligen Fließverhalten der Polyolefine angepasst werden. Nachteile dieses Werkzeugsystems sind somit in der komplexen Dimensionierung der Schmelzeführungskanäle zu sehen, die ihren Grund in der großen Anzahl von miteinander korrelierenden Geometrieparametern hat. Dies schränkt die Einsatzmöglichkeit eines Wendelverteilers über die große Bandbreite der Polyolefintypen erheblich ein.

Wendelverteiler mit relativ tiefen Wendeln sind erfahrungsgemäß universeller einsetzbar, führen aber zu einer hohen Verweildauer der Schmelze in den tiefen Wendelgängen. Weiterhin ist bei dieser Form der Ausführung sowohl die Verweilzeit der einzelnen Fließpfade als auch der Schergeschwindigkeitsbereich der einzelnen Schmelzepartikel höchst heterogen. Die genannten Inhomogenitäten führen zu unterschiedlichen Temperaturen in der Schmelze als auch zum Aufbau von Orientierungszuständen und wirken sich schließlich nachteilig in der Rohrqualität aus.

Siebkorbwerkzeuge haben bei der Rohrextrusion prinzipiell die gleiche Aufgabe wie Wendelverteilerwerkzeuge. Die Siebkörbe ermöglichen aufgrund ihrer Konstruktion eine zweimalige Umlenkung des Schmelzestroms, so dass auch hierbei eine sehr gute Durchmischung und Homogenisierung der Schmelze stattfindet. Im Gegensatz zu den Wendelverteilern sind sie bei Polyolefinen universeller einsetzbar. Des Weiteren ist die mittlere Verweilzeit verhältnismäßig kurz, aber auch die Gesamtbreite des Verweilspektrums, als Kennzeichen für die Selbstreinigung, für die Produktion akzeptabel. Aufgrund der Gesamtgestaltung des Siebkorbprinzips ist der Bereich hoher Schmelzescherung auf das Siebsegment beschränkt, wodurch die dissipative Temperaturerhöhung gering ausfällt, und somit auch das Temperaturspektrum der einzelnen Schmelzepartikel relativ konstant ist.

Verbesserungspotential bietet die bisherige Gestaltung des Anströmkanals. Die von den Verteilerbohrungen gelieferten Schmelzeströme münden in einen Torus, von dem aus senkrecht zur Extrusionsrichtung der Siebkorb mit Material versorgt wird. Die Schmelze unterliegt im Übergangsbereich von Anströmkanal zum Ringraum keiner eindeutigen Zwangsführung und ermöglicht somit den einzelnen Schmelzepartikeln, sehr unterschiedlichen Fließpfaden zu folgen. Die Vorzugsrichtung der Schmelzeströme in Extrusionsrichtung wird von den Verteilerbohrungen gebildet. Neben diesen bilden sich, in Rotationsrichtung des Torusquerschnitts, Strömungen aus, um den Ringraum zu füllen. Die Ausprägung der Querströmung entspricht den sich einstellenden Isobarenverläufen im Torus.

Diese Siebkorbwerkzeuge oder auch Siebplatten weisen eine Vielzahl von nebeneinander angeordneten Bohrungen auf, durch die die Schmelze hindurchgefördert wird. Nach dem Austreten der Schmelze aus dem formgebenden Düsensatz des Rohrwerkzeuges wird der Schmelzeschlauch in der nachfolgenden Kalibriereinrichtung an die Innenwandung der Kalibrierhülse - unterstützt durch ein anliegendes Vakuum gedrückt und bildet durch die Temperaturdifferenz umgehend eine verfestigte Außenhaut. Aufgrund der nicht vorhandenen Innenkalibrierung als auch der relativ langen Aushärtezeit bzw. Erstarrungszeit, bedingt durch das geringe Temperaturgefälle und den schlechten Wärmeübergang zur Luft im Rohrinneren, hat der Kunststoff eine gute Relaxationsmöglichkeit. Bedingt durch diese Prozessbegebenheiten zeigt sich je nach Anwendungsfall eine Streifenstruktur auf der Innenoberfläche des Halbzeuges bzw. Rohres. Je nach Einsatzgebiet und eingesetzten Materialien wird diese unglatte Oberfläche der Innenseite des Rohres nicht gewünscht.

Aufgabe der Erfindung ist es daher, eine Vorrichtung anzubieten, mittels der eine möglichst glatte Oberfläche des zu erzeugenden Profils gewährleistet wird, sowie ein Verfahren zum Beeinflussen der Produktqualität. Diese Aufgabe wird durch die Vorrichtung gemäß den Merkmalen des Anspruchs 1 und durch das Verfahren gemäß den Merkmalen des Anspruchs 10 gelöst. Vorteilhafte Weiterbildungen der Erfindung sind in den Unteransprüchen angegeben.

Die Lösung der Aufgabe ist in Verbindung mit dem Oberbegriff des Anspruches 1 dadurch gekennzeichnet, dass das Verteilelement fest mit der Vorrichtung verbunden ist, wobei zwischen dem Verteilelement und einem Basisteil der Vorrichtung ein definierter Spalt vorhanden ist. Durch diesen definierten Spalt, der vorzugsweise frei und ohne Unterbrechung umlaufend ist, wird eine bestimmte Menge Kunststoff definiert geleitet und überlagert somit die durch die Vielzahl der Bohrungen im Verteilelement auftretende Strömungsfäden und unterbindet somit das Auftreten der streifenförmigen Rohrinnenoberfläche bzw. Streifenstruktur. Da dieser Spalt in Extrusionsrichtung gesehen hinter den Bohrungen des Verteilelementes liegt, wird die durch den Spalt geführte Kunststoffschicht quasi unter die durch die Bohrungen des Verteilelementes geführte Kunststoffmasse gelegt.

Der Bereich, in dem das Verteilelement angeordnet ist, ist so aufgebaut, dass an einem Basisteil des Werkzeuges ein Verbindungsring angeordnet ist, mit dem das Verteilelement verschraubt wird. Bedingt durch diese Verschraubung wird das Verteilelement in einer definierten Position gehalten. Dieser Verbindungsring kann so ausgestaltet werden, dass durch die Lage des Verteilelementes mittels üblicher Verstellelemente oder durch Anbringen eines Zwischenringes der definierte Spalt zwischen dem Verteilelement und dem Basisteil des Werkzeuges verändert werden kann. Selbstverständlich ist es auch denkbar, dass diese Verstellung von außen und während des Prozesses, sprich Fertigung eines Rohres, verstellt werden kann, denn, wie oben ausgeführt, wird über den definierten Spalt eine weitere Kunststoffschicht auf die Innenwandung des Rohres gebracht, die durch die Breite des Spaltes vorgegeben ist. Wird während der Produktion festgestellt, dass die Innenoberfläche des Rohres noch nicht den gewünschten Anforderungen entspricht, kann sie durch die Veränderung des Spaltes verbessert werden. Diese Veränderung kann auch automatisch mittels der Steuerung des Extruders und einer damit verbundenen Messeinrichtung für die Oberflächenqualität gesteuert oder geregelt werden.

Ebenso ist es denkbar, durch die Einbringung einer Temperierung im spaltnahen Bereich, die aus einer elektrischen oder fluiden Temperierung bestehen kann, die Strömungsgeschwindigkeit und damit die Durchflussmenge der Kunststoffmasse über den Spaltquerschnitt gezielt zu beeinflussen.

Darüber hinaus ist es möglich, über thermische oder elektromechanische Stellglieder, die im spaltnahen Bereich untergebracht sind, ähnlich einer Düsenlippeneinstellung bei Breitschlitzdüsen, eine Einstellung der Spaltenbreite vorzunehmen.

Als Verteilelement kann ein Siebkorb, eine Siebplatte oder auch ein Radialverteiler vorgesehen werden.

Vorteilhafterweise ist der definierte Spalt ein Ringspalt, der sich zwischen dem Verteilelement und dem Basisteil umlaufend ergibt. Bezogen auf die Extrusionsrichtung bildet der Ringspalt einen Winkel zwischen 1° und 90°, vorzugsweise zwischen 20° und 45°, idealerweise beträgt der Winkel 30°.

Weiterbildungsgemäß ist vorgesehen, dass ein erster Schmelzekanal zwischen dem Verteilelement und einem Vorverteilelement gebildet wird. Die Schmelze wird also vom ersten Schmelzekanal durch das Verteilelement in einen zweiten Schmelzekanal gepresst, der sich wiederum durch das Verteilelement und den Verbindungsring bildet. Der zweite Schmelzekanal bildet dann nach möglicherweise erforderlichen Umlenkungen und Verengungen und Erweiterungen den Schmelzeausgang, über den dann das eigentliche Rohr gebildet wird.

Es wird somit zwischen dem ersten und dem zweiten Schmelzekanal über den definierten Spalt ein Bypass gebildet.

Die Lösung bezüglich des Verfahrens ist in Verbindung mit dem Oberbegriff des Anspruches 10 dadurch gekennzeichnet, dass ein zwischen dem Verteilelement und einem Basisteil der Vorrichtung definierter Spalt vorgesehen wird. Weiterbildungsgemäß kann der Spalt in Abhängigkeit der gemessenen Profilinnenoberfläche in der Spaltweite verändert werden und/oder die Durchflussmenge der Kunststoffmasse durch den definierten Spalt durch thermische Beeinflussung verändert werden.

Durch dieses Verfahren kann auch während der Produktion auf die Qualität des Produktes Einfluss genommen werden. Durch Veränderung der Breite des Spaltes, beispielsweise über Stellschrauben, die das Verteilelement mehr oder weniger von dem Basisteil der Vorrichtung beabstandet, verändert sich die Breite des Spaltes und nimmt somit direkten Einfluss auf die Durchflussmenge an Kunststoff durch diesen.

Unterhalb der Oberfläche der den Spalt bildenden Teile können, wie weiter oben bereits beschrieben, elektrische oder fluidische Temperierungen liegen, die während des Prozesses aktiviert werden, um die Strömungsgeschwindigkeit und damit die Durchflussmenge des Kunststoffes, eben durch Veränderung dessen Viskosität, zu verändern.

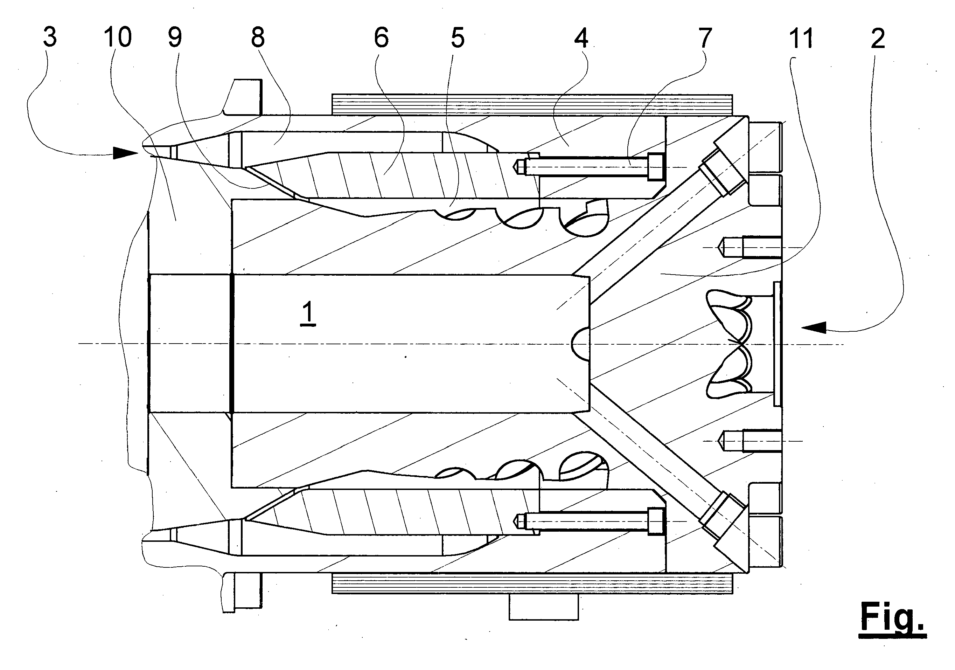

In der Zeichnung ist schematisch ein Ausführungsbeispiel der Erfindung wiedergegeben. Die Figur zeigt einen Abschnitt eines Extrusionswerkzeuges 1 mit einem Schmelzeeingang 2 und einem Schmelzeausgang 3. In diesem Ausführungsbeispiel wird die Schmelze über ein Vorverteilelement 11, wie es beispielsweise aus der DE 103 15 906 A1 bekannt ist, von der zylindrischen Form in eine Ringform gebracht. Der wendelförmige Kanal des Vorverteilelementes bildet mit dem Verteilelement 6 und Teilen des Verbindungsringes 4 einen ersten Schmelzekanal 5. Das hier als geschnittenen Block dargestellte Verteilelement 6 ist hier beispielhaft als Siebkorb ausgebildet, wobei die Vielzahl der einzelnen Bohrungen nicht dargestellt ist. Das Verteilelement 6 ist mittels Schrauben 7 fest mit dem Verbindungsring 4 verbunden. Der Verbindungsring 4 stützt sich an weiteren Teilen der Vorrichtung ab und ist somit nicht verschieblich gelagert. Es ist somit gewährleistet, dass sich zwischen dem Verteilelement 6 und dem Basisteil 10 des Werkzeuges ein definierter Spalt 9 ergibt. Wie weiter oben bereits beschrieben kann dieser Spalt in seiner Breite verändert werden, was beispielsweise durch Anbringen einer Scheibe zwischen dem Verteilelement 6 und dem Verbindungsring 4 ermöglicht wird. Ein zweiter Schmelzekanal 8 wird durch das Verteilelement 6 und den Verbindungsring 4 gebildet. Dieser zweite Schmelzekanal 8 setzt sich in Extrusionsrichtung entlang des Basisteiles 10 und dem Verbindungsring 4 fort und bildet den Schmelzeausgang 3. Durch diesen Bypass zwischen dem ersten Schmelzekanal 5 und dem zweiten Schmelzekanal 8 wird eine Vorrichtung angeboten, mittels der ein Rohr mit glatter Innenoberfläche realisiert werden kann.

Die hier vorgeschlagene Vorrichtung ist insbesondere für die Verarbeitung von Rohren vorgesehen. Grundsätzlich ist dieses System mit dem Bypass, sprich dem Spalt zwischen dem ersten und zweiten Schmelzekanal, aber auch für die Herstellung von anderen Profilen oder Platten verwendbar.

### Bezugszeichenliste:

- 1: Extrusionswerkzeug
- 2: Schmelzeeingang
- 3: Schmelzeausgang
- 4: Verbindungsring
- 5: erster Schmelzekanal
- 6: Verteilelement
- 7: Schraube
- 8: zweiter Schmelzekanal
- 9: Ringspalt
- 10: Basisteil
- 11: Vorverteilelement

## Patentansprüche

1. Vorrichtung zum Verteilen von plastischer Kunststoffmasse in einem Extrusionswerkzeug (1), insbesondere Rohrextrusionswerkzeug, umfassend
einen Schmelzekanal (5,8), einen Schmelzeeingang (2) und mindestens
einen Schmelzeausgang (3), wobei
zwischen Schmelzeeingang (2) und Schmelzeausgang (3) ein Verteilelement (6) im Schmelzekanal (5,8) des Extrusionswerkzeuges angeordnet ist, und
wobei das Verteilelement (6) zwischen dem Schmelzeeingang **und dem Schmelzeausgang in Extrusions- oder Fliessrichtung axial sich derartig erstreckt, dass im Verteilelement (6) Durch-fluss-Bohrungen senkrecht zur Extrusions- oder Fliessrichtung vorgesehen sind, so dass**
**stromaufwärts ein Bereich des Schmelzeeinganges (2) und stromabwärts mindestens ein Bereich des Schmelzeausganges (3) definiert wird, und wobei**
Mittel (7) zur Befestigung des Verteilelementes (6) an einem Verbindungsring (4) des Extrusionswerkzeuges (1) vorgesehen sind,
**dadurch gekennzeichnet, dass**
das Verteilelement (6) **in Bereich** des Schmelzeeinganges (2) derart mit dem Verbindungsring (4) verbunden ist, dass im Bereich des Schmelzeausganges (3) im Schmelzekanal (5,8) ein definierter Spalt (9) zur Formung eines Bypasses zur **teilweisen** Umgehung des Verteilelementes (6) gebildet wird.

2. Vorrichtung nach Anspruch 1, **dadurch gekennzeichnet, dass** das Verteilelement (6) mit dem Verbindungsring (4) verschraubt ist.

3. Vorrichtung nach Anspruch 1 oder 2, **dadurch gekennzeichnet, dass** das Verteilelement (6) ein Siebkorb, eine Siebplatte oder ein Radialverteiler ist.

4. Vorrichtung nach einem der vorigen Ansprüche, **dadurch gekennzeichnet, dass** der definierte Spalt (9) ein Ringspalt ist.

5. Vorrichtung nach mindestens einem der vorigen Ansprüche, **dadurch gekennzeichnet, dass** ein erster Schmelzekanal (5) zwischen dem Verteilelement (6) und einem Vorverteilelement (11) gebildet wird.

6. Vorrichtung nach mindestens einem der vorigen Ansprüche, **dadurch gekennzeichnet, dass** ein zweiter Schmelzekanal (8) zwischen dem Verteilelement (6) und Verbindungsring (4) gebildet wird.

7. Vorrichtung nach Anspruch 5 oder 6, **dadurch gekennzeichnet, dass** der definierte Spalt (9) ein Bypass zwischen dem ersten (5) und dem zweiten (8) Schmelzekanal ist.

8. Vorrichtung nach Anspruch 7, **dadurch gekennzeichnet, dass** der definierte Spalt (9) in der Breite veränderbar ist.

9. Vorrichtung nach Anspruch 8, **dadurch gekennzeichnet, dass** die Veränderung der Breite des definierten Spaltes (9) mittels einer thermischen, thermomechanischen, elektromechanischen oder mechanischen Verstellung realisierbar ist.

10. Verfahren zum Verteilen von plastischer Kunststoffmasse in einem Extrusionswerkzeug (1), insbesondere Rohrextrusionswerkzeug, umfassend einen Schmelzekanal (5,8), einen Schmelzeeingang (2) und mindestens einen Schmelzeausgang (3), weiterhin umfassend
- das Vorsehen eines Verteilelementes (6) zwischen Schmelzeeingang (2) und Schmelzeausgang (3) im Schmelzekanal (5,8) des Extrusionswerkzeuges, wobei
das Verteilelement (6) zwischen dem Schmelzeeingang und dem Schmelzeausgang in Extrusions- oder Fliessrichtung axial sich derartig erstreckt, dass im Verteilelement (6) Durchfluss-Bohrungen senkrecht zur Extrusions- oder Fliessrichtung vorgesehen sind, so dass stromaufwärts ein Bereich des Schmelzeeinganges (2) und stromabwärts mindestens ein Bereich des Schmelzeausganges (3) definiert wird,
- das Vorsehen von Mitteln (7) zur Befestigung des Verteilelementes (6) an einem Verbindungsring (4) des Extrusionswerkzeuges (1) vorgesehen sind,
**dadurch gekennzeichnet, dass**
das Verteilelement (6) in Bereich (auf der Seite) des Schmelzeeinganges (2) derart mit dem Verbindungsring (4) verbunden ist, dass im Bereich des Schmelzeausganges (3) im Schmelzekanal (5,8) ein definierter Spalt (9) zur Formung eines Bypasses zur teilweisen Umgehung des Verteilelementes (6) gebildet wird.

11. Verfahren nach Anspruch 10, **dadurch gekennzeichnet, dass** die Spaltweite des definierten Spalts (9) in Abhängigkeit der gemessenen Profilinnenoberfläche verändert wird und/oder die Durchflussmenge der Kunststoffmasse durch den definierten Spalt (9) durch thermische Beeinflussung verändert wird.

## Claims

1. Device for distributing plasticized material in an extrusion die (1), in particular a pipe extrusion die, comprising
a melt channel (5, 8), a melt inlet (2) and at least
one melt outlet (3), wherein
a distributing element (6) is arranged between the melt inlet (2) and the melt outlet (3) in the melt channel (5, 8) of the extrusion die, and
wherein the distributing element (6) extends between the melt inlet and the melt outlet axially in the direction of extrusion or flow in such a way that through-flow bores are provided in the distributing element (6) perpendicularly to the direction of extrusion or flow, so that
upstream a region of the melt inlet (2) and downstream at least one region of the melt outlet (3) are defined, and wherein
means (7) are provided for securing the distributing element (6) on a connecting ring (4) of the extrusion die (1),
**characterized in that**
the distributing element (6) is connected to the connecting ring (4) in the region of the melt inlet (2) in such a way that a defined gap (9) is formed in the melt channel (5, 8) in the region of the melt outlet (3) to form a bypass for partially bypassing the distributing element (6).

2. Device according to Claim 1, **characterized in that** the distributing element (6) is screwed to the connecting ring (4).

3. Device according to Claim 1 or 2, **characterized in that** the distributing element (6) is a screen basket, a screen plate or a radial distributor.

4. Device according to one of the preceding claims, **characterized in that** the defined gap (9) is an annular gap.

5. Device according to at least one of the preceding claims, **characterized in that** a first melt channel (5) is formed between the distributing element (6) and a pre-distributing element (11).

6. Device according to at least one of the preceding claims, **characterized in that** a second melt channel (8) is formed between the distributing element (6) and the connecting ring (4).

7. Device according to Claim 5 or 6, **characterized in that** the defined gap (9) is a bypass between the first melt channel (5) and the second melt channel (8).

8. Device according to Claim 7, **characterized in that** the defined gap (9) is variable in width.

9. Device according to Claim 8, **characterized in that** the variation in the width of the defined gap (9) can be realized by means of a thermal, thermomechanical, electromechanical or mechanical adjustment.

10. Method for distributing plasticized material in an extrusion die (1), in particular a pipe extrusion die, comprising a melt channel (5, 8), a melt inlet (2) and at least one melt outlet (3), and also comprising
- the provision of a distributing element (6) between the melt inlet (2) and the melt outlet (3) in the melt channel (5, 8) of the extrusion die, wherein
the distributing element (6) extends between the melt inlet and the melt outlet axially in the direction of extrusion or flow in such a way that through-flow bores are provided in the distributing element (6) perpendicularly to the direction of extrusion or flow, so that upstream a region of the melt inlet (2) and downstream at least one region of the melt outlet (3) are defined, and
- the provision of means (7) for securing the distributing element (6) on a connecting ring (4) of the extrusion die (1),
**characterized in that**
the distributing element (6) is connected to the connecting ring (4) in the region (on the side) of the melt inlet (2) in such a way that a defined gap (9) is formed in the melt channel (5, 8) in the region of the melt outlet (3) to form a bypass for partially bypassing the distributing element (6).

11. Method according to Claim 10, **characterized in that** the gap width of the defined gap (9) is varied in dependence on the measured inner surface of the profile and/or the flow rate of the material through the defined gap (9) is varied by thermal influencing.

## Revendications

1. Dispositif pour distribuer une masse en matière plastique dans un outil d'extrusion (1), notamment un outil d'extrusion tubulaire, comprenant :
un canal pour la matière en fusion (5, 8), une entrée pour la matière en fusion (2) et au moins une sortie pour la matière en fusion (3),
un élément de distribution (6) étant disposé entre l'entrée pour la matière en fusion (2) et la sortie pour la matière en fusion (3) dans le canal pour la matière en fusion (5, 8) de l'outil d'extrusion, et
l'élément de distribution (6) s'étendant axialement entre l'entrée pour la matière en fusion et la sortie pour la matière en fusion dans la direction d'extrusion ou d'écoulement, de telle sorte que des alésages de passage soient réalisés dans l'élément de distribution (6) perpendiculairement à la direction d'extrusion ou d'écoulement, de telle sorte
qu'en amont soit définie une région de l'entrée pour la matière en fusion (2) et en aval soit définie une région de la sortie pour la matière en fusion (3), et
des moyens (7) étant prévus pour la fixation de l'élément de distribution (6) sur une bague de connexion (4) de l'outil d'extrusion (1),
**caractérisé en ce que**
l'élément de distribution (6) est connecté dans la région de l'entrée pour la matière en fusion (2) à la bague de connexion (4) de telle sorte que dans la région de la sortie pour la matière en fusion (3) dans le canal pour la matière en fusion (5, 8), un interstice défini (9) soit formé afin de former une dérivation pour contourner partiellement l'élément de distribution (6).

2. Dispositif selon la revendication 1, **caractérisé en ce que** l'élément de distribution (6) est vissé à la bague de connexion (4).

3. Dispositif selon la revendication 1 ou 2, **caractérisé en ce que** l'élément de distribution (6) est un panier à crible, une plaque à crible ou un distributeur radial.

4. Dispositif selon l'une quelconque des revendications précédentes, **caractérisé en ce que** l'interstice défini (9) est un interstice annulaire.

5. Dispositif selon au moins l'une quelconque des revendications précédentes, **caractérisé en ce qu'**un premier canal pour la matière en fusion (5) est formé entre l'élément de distribution (6) et un élément de distribution préalable (11).

6. Dispositif selon au moins l'une quelconque des revendications précédentes, **caractérisé en ce qu'**un deuxième canal pour la matière en fusion (8) est formé entre l'élément de distribution (6) et la bague de connexion (4).

7. Dispositif selon la revendication 5 ou 6, **caractérisé en ce que** l'interstice défini (9) est une dérivation entre le premier (5) et le deuxième (8) canal pour la matière en fusion.

8. Dispositif selon la revendication 7, **caractérisé en ce que** la largeur de l'interstice défini (9) peut être variée.

9. Dispositif selon la revendication 8, **caractérisé en ce que** la variation de la largeur de l'interstice défini (9) peut être effectuée au moyen d'un réglage thermique, thermomécanique, électromécanique, ou mécanique.

10. Procédé pour distribuer une masse en matière plastique dans un outil d'extrusion (1), notamment un outil d'extrusion tubulaire, comprenant un canal pour la matière en fusion (5, 8), une entrée pour la matière en fusion (2) et au moins une sortie pour la matière en fusion (3), et comprenant en outre :
- la fourniture d'un élément de distribution (6) entre l'entrée pour la matière en fusion (2) et la sortie pour la matière en fusion (3) dans le canal pour la matière en fusion (5, 8) de l'outil d'extrusion,
l'élément de distribution (6) s'étendant axialement entre l'entrée pour la matière en fusion et la sortie pour la matière en fusion dans la direction d'extrusion ou d'écoulement, de telle sorte que des alésages de passage soient prévus dans l'élément de distribution (6) perpendiculairement à la direction d'extrusion ou d'écoulement, de telle sorte qu'en amont soit définie une région de l'entrée pour la matière en fusion (2) et en aval soit définie une région de la sortie pour la matière en fusion (3),
- la fourniture de moyens (7) pour la fixation de l'élément de distribution (6) sur une bague de connexion (4) de l'outil d'extrusion (1),
**caractérisé en ce que**
l'élément de distribution (6) est connecté dans la région (du côté) de l'entrée pour la matière en fusion (2) à la bague de connexion (4) de telle sorte que dans la région de la sortie pour la matière en fusion (3) dans le canal pour la matière en fusion (5, 8), un interstice défini (9) soit formé afin de former une dérivation pour contourner partiellement l'élément de distribution (6).

11. Procédé selon la revendication 10, **caractérisé en ce que** la largeur de l'interstice défini (9) peut être variée en fonction de la surface intérieure mesurée du profilé et/ou la quantité de passage de la masse en matière plastique à travers l'interstice défini (9) peut être variée par un influence par voie thermique.
